# EUROPEAN PATENT APPLICATION

(11) **EP 4 530 135 A1**
(43) Date of publication of application: **02.04.2025**
(21) Application number: 23829509.1
(22) Date of filing: 20.03.2023
(51) Int. Cl.: B60R 21/16, B60R 21/213, B60R 21/233

(54) **AIRBAG DEVICE**

(30) Priority: 30.06.2022 CN 202221668243 U
(71) Applicant: Autoliv Development AB, 44783 Vargarda (SE)
(72) Inventor: QIN, Yawei, Nantong, Jiangsu 226010 (CN); XU, Yao, Nantong, Jiangsu 226010 (CN); CAO, Rongrong, Nantong, Jiangsu 226010 (CN)
(74) Representative: Feucker, Max Martin
(86) International application number: PCT/CN2023/082497
(87) International publication number: WO 2024/001317

(57) **Abstract**

A safety airbag device. The safety airbag device is used for mounting at the roof of a vehicle, and includes an airbag (10, 10') having an inflated state and a stowed state and including a first chamber (110) and a second chamber (120) in fluid communication with each other. The airbag (10, 10') includes a main panel (11), and a first side panel (12) and a second side panel (13) connected to the main panel (11). The main panel (11) is configured to be in the shape of a strip, and includes two first folding lines (11A) spaced apart in the length direction of the main panel (11), the two first folding lines (11A) dividing the main panel (11) into a first section (111), a second section (112), and a third section (113) located between the first section and the second section. The second chamber (120) is defined by the third section (113), as well as the first side panel (12) and the second side panel (13) connected to two opposite sides of the third section (113) in the width direction of the main panel (11). At least one of the first section (111) and the second section (112) includes a second folding line (11B). The first section (111) and the second section (112) partially overlap after being folded along the respective folding lines thereof, and the first chamber (110) is defined only by the first section (111) and the second section (112).

## Description

### TECHNICAL FIELD

The present invention relates to a safety device in a vehicle, and in particular, to a driver safety airbag and a steering wheel.

### BACKGROUND

Existing vehicle safety airbags include, for example, overhead safety airbags arranged at the top of the vehicle, safety airbags arranged in dashboards, and safety airbags (alternatively referred to as driver safety airbags) arranged in steering wheels. When a vehicle is hit or impacted, a gas generator of a safety airbag receives a signal transmitted by means of a wire harness connected to the gas generator so as to ignite a propellant. Then, gas generated by the burning propellant rapidly inflates a stowed airbag of the safety airbag, and the inflated airbag expands and then bursts from a weak portion of an airbag housing, to extend to a predetermined position in front of an occupant and protect the occupant from injury brought about by a collision.

However, in some safety airbags, the shapes of panels used for forming the airbags are irregular, and manufacturing steps of the airbags are complex, resulting in high manufacturing costs for the safety airbags.

Therefore, a safety airbag having low manufacturing costs is desired.

### SUMMARY

The object of the present invention is to provide a safety airbag having low manufacturing costs.

Provided in the present invention is a safety airbag device used for mounting at the roof of a vehicle, comprising:
An airbag, having an inflated state and a stowed state, and comprising a first chamber and a second chamber in fluid communication with each other,
Wherein,
The airbag comprises a main panel, and a first side panel and a second side panel connected to the main panel,
The main panel is configured to be in the shape of a strip, and comprises two first folding lines spaced apart in the length direction of the main panel, the two first folding lines dividing the main panel into a first section, a second section, and a third section located between the first section and the second section,
The second chamber is defined by the third section, as well as the first side panel and the second side panel connected to two opposite sides of the third section in the width direction of the main panel,
At least one of the first section and the second section comprises a second folding line, the first section and the second section partially overlapping after being folded along the respective folding lines thereof, and the first chamber is defined only by the first section and the second section.

According to an embodiment of the present invention, the first side panel and the second side panel are configured to be completely symmetrical with respect to a center line of the airbag in the width direction, the first side panel and the second side panel each having a first end and a second end opposite to each other, the second end being configured to have a curved profile, and the first side panel and the second side panel narrowing in a direction from the second end toward the first end.

According to an embodiment of the present invention, the first chamber is configured to have a flat shape and comprises a gas inlet, and the gas inlet is positioned at a position closer to the first ends than to the second ends of the first side panel and the second side panel.

According to an embodiment of the present invention, the second section comprises one second folding line, an end portion of the second section and an end portion of the first section together define the gas inlet, and the two first folding lines are partially connected together in the width direction of the main panel to define the size of a vent between the first chamber and the second chamber.

According to an embodiment of the present invention, the second section comprises one second folding line, and the first section comprises one second folding line, a portion of the first section, after being folded along the second folding line, being partially held between the second section, and the two first folding lines being configured to be spaced apart from each other by a certain distance.

According to an embodiment of the present invention, the width of at least a portion of the third section is greater than the width of the first section and the width of the second section.

According to an embodiment of the present invention, the airbag is formed only by the main panel, the first side panel, and the second side panel.

According to an embodiment of the present invention, the gas inlet is configured to be connected to a gas generator of the safety airbag device, so that gas generated by the gas generator sequentially enters the first chamber and the second chamber.

According to an embodiment of the present invention, the main panel, the first side panel and the second side panel are fabric.

According to an embodiment of the present invention, the main panel, the first side panel and the second side panel are connected together via stitches.

According to an embodiment of the present invention, at an intersection of the first chamber and the second chamber, the first section, the second section, and the third section each has a tab extending outwards in the width direction thereof.

### BRIEF DESCRIPTION OF THE DRAWINGS

The features, advantages, and technical effects of exemplary embodiments of the present invention will be described below with reference to the accompanying drawings. In the accompanying drawings, the same reference numbers denote the same elements, where
FIG. 1 schematically illustrates a safety airbag device according to a first embodiment of the present invention.
FIG. 2 schematically illustrates a safety airbag device according to a second embodiment of the present invention.
FIG. 3, FIG. 4(a), FIG. 4(b), FIG. 5(a) and FIG. 5(b) schematically illustrate manufacturing methods for the safety airbag device according to the first embodiment and the second embodiment of the present invention, respectively.

### DETAILED DESCRIPTION

Specific implementation manners of the safety airbag device according to the present invention will be described below with reference to the accompanying drawings. The following detailed description and the accompanying drawings are used to illustratively explain the principles of the present invention. The present invention is not limited to the described preferred embodiments, and various embodiments described in the present invention can be used individually or in any combination. The scope of protection of the present invention is defined by the claims.

In addition, terms for spatial relations (such as "upper", "lower", "left", "right", etc.) are used to describe a relative positional relationship between an element and another element shown in the accompanying drawings. Therefore, when used, the terms for spatial relations may be applied to directions different from those shown in the accompanying drawings. Obviously, although all of these terms for spatial relations refer to the directions shown in the accompanying drawings for ease of explanation, a person skilled in the art will appreciate that directions different from those shown in the drawings may be used.

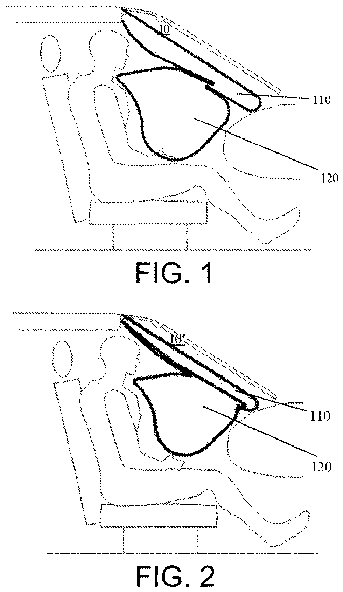

FIG. 1 schematically illustrates a safety airbag device according to an embodiment of the present invention. FIG. 2 schematically illustrates a safety airbag device according to another embodiment of the present invention. A safety airbag device according to the embodiments of the present invention is described below with reference to FIG. 1 and FIG. 2.

It should be noted that the safety airbag device provided in the present invention is used for mounting at the roof of a vehicle, and is also referred to as an overhead safety airbag device. As shown in FIG. 1 and FIG. 2, the safety airbag device includes an airbag 10/10'. The airbag has an inflated state and a stowed state, and includes a first chamber 110 and a second chamber 120 in fluid communication with each other. Typically, when the safety airbag device is mounted in a vehicle, the first chamber 110 will extend in a front-rear direction of the vehicle along the roof, and the second chamber 120 will extend from the windshield of the vehicle towards an occupant. It may be appreciated that the safety airbag device of the present invention further includes a gas generator (not shown). Gas generated by the gas generator is used to cause the airbag to enter the inflated state from the stowed state. In the safety airbag devices shown in FIG. 1 and FIG. 2, a left side of the first chamber 110 is provided with a gas inlet connected to the gas generator, and a communication port is provided between the first chamber 110 and the second chamber 120. Therefore, gas generated by the gas generator sequentially enters the first chamber 110 and the second chamber 120.

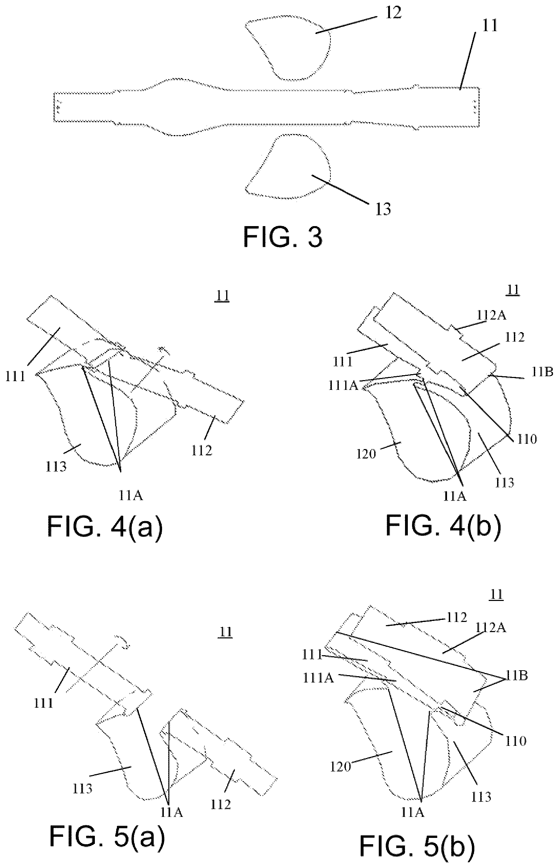

FIG. 3, FIG. 4(a), FIG. 4(b), FIG. 5(a) and FIG. 5(b) schematically illustrate a manufacturing method for the safety airbag device according to the first embodiment and the second embodiment of the present invention, respectively. A safety airbag device according to the embodiments of the present invention is described below with reference to FIG. 3, FIG. 4(a), FIG. 4(b), FIG. 5(a) and FIG. 5(b).

As shown in FIG. 3, in the safety airbag device of the present invention, the airbag thereof includes a main panel 11, a first side panel 12, and a second side panel 13. The main panel 11 is configured to be in the shape of a strip. The first side panel 12 and the second side panel 13 are configured to be substantially oval-shaped, that is, a right end is wide and a left end is narrow, and the two ends are connected to each other by a smooth transition line, so that the overall shape is regular. The first side panel 12 and the second side panel 13 are to be connected to the main panel 11 to form the first chamber 110 and the second chamber 120, which will be described in detail below.

FIG. 4(a) and FIG. 4(b) illustrate a manufacturing method for the safety airbag device according to the first embodiment of the present invention. As shown in FIG. 4(a), the main panel 11 includes two first folding lines 11A spaced apart in the length direction of the main panel 11, so that the main panel 11 is divided by the two first folding lines 11A into a first section 111, a second section 112, and a third section 113 located between the first section and the second section. The first section 111 and the second section 112 of the main panel 11 are folded in opposite directions along the two first folding lines 11A, respectively, and the two first folding lines 11A are arranged one above the other, so as to be close to each other. Then, as shown in FIG. 4(b), the second section 112 is provided with a second folding line 11B, and a portion of the second section 112, after being folded along the second folding line 11B, partially overlaps with the first section 111. Finally, the first side panel 12 and the second side panel 13 are connected (for example, by stitches) to two sides of the third section 113 in the width direction of the main panel 11, to form the second chamber 120, and the first section 111 and the second section 112 of the main panel 11 are connected to each other at an overlap along the two sides in the width direction thereof. At overlaps of different portions of the second section 112, the different portions of the second section 112 are similarly connected to the two sides in the width direction thereof, to form the first chamber 110. Meanwhile, an end portion of the second section 112 and an end portion of the first section 111 together define the gas inlet connected to the gas generator.

Exemplarily, as described above with reference to FIG. 4(a) and FIG. 4(b), two end portions of the third section 113 are arranged one above the other so that the two first folding lines 11A are partially connected to each other in the width direction of the main panel 11, which makes it convenient to define the size of the communication port between the first chamber 110 and the second chamber 120 in the width direction, i.e., adjust the size of the communication port. Such an arrangement enables the speed of inflation of the second chamber 120 to be controlled in a simple manner.

As an example, as shown in FIG. 4(b), at an intersection of the first chamber 110 and the second chamber 120, the main panel 11 has a tab extending outwards in the width direction thereof. That is, the width of the main panel 11 at the intersection is greater than the width close to the intersection. That is, the first section 111 has a tab 111A, the second section 112 has a tab 112A, and the third section 113 has a tab (not shown), which facilitate reliable connection between the main panel and the two side panels to prevent leakage of fluid in the chambers.

FIG. 5(a) and FIG. 5(b) illustrate a manufacturing method for the safety airbag device according to the second embodiment of the present invention. As shown in FIG. 5(a), the main panel 11 includes two first folding lines 11A spaced apart in the length direction of the main panel 11, so that the main panel 11 is divided by the two first folding lines 11A into a first section 111, a second section 112, and a third section 113 located between the first section and the second section. The first section 111 and the second section 112 are folded in opposite directions along the two first folding lines 11A, respectively, and the two first folding lines 11A are spaced apart from each other by a certain distance. Then, as shown in FIG. 5(b), the first section 111 includes one second folding line 11B, and the second section 112 is provided with a second folding line 11B. After a portion of the first section 111 is folded along the second folding line 11B and a portion of the second section 112 is folded along the second folding line 11B, the folded portion of the first section 111 is partially held between the second section 112 (the held end portion of the first section 111 is not connected, so as to form a flow channel between the two chambers, as shown in FIG. 2). The portion of the second section 112, after being folded along the second folding line 11B, partially overlaps with the first section 111. Finally, the first side panel 12 and the second side panel 13 are connected (for example, by stitches) to two sides of the third section 113 in the width direction of the main panel 11 to form the second chamber 120, and the first section 111 and the second section 112 of the main panel 11 are connected to each other at an overlap along the two sides in the width direction thereof to form the first chamber 110.

Therefore, in the safety airbag device of the present invention, the second chamber 120 is defined by the third section 113 of the main panel 11 as well as the first side panel 12 and the second side panel 13 connected to two opposite sides of the third section 113 in the width direction of the main panel 11, and the first chamber 110 is defined only by the first section 111 and the second section 112 of the main panel 11.

In the safety airbag device of the present invention, the shapes of the main panel and the side panels for forming the airbag are regular, and the airbag is manufactured by connecting the two side panels to the two sides of the folded main panel, so that it is only necessary to configure a fixing and connecting (for example, stitching) operation for the two sides of the width of the airbag, and manufacturing steps of the airbag may therefore be quickly performed to speed up the manufacturing of the airbag. Therefore, the manufacturing costs of the safety airbag device of the present invention are low.

As an example, similarly, as shown in FIG. 5(b), at an intersection of the first chamber 110 and the second chamber 120, the main panel 11 has a tab extending outwards in the width direction thereof. That is, the width of the main panel 11 at the intersection is greater than the width close to the intersection. That is, the first section 111 has a tab 111A, the second section 112 has a tab 112A, and the third section 113 has a tab (not shown), which facilitate reliable connection between the main panel and the two side panels to prevent leakage of fluid in the chambers.

According to the embodiments of the present invention, the first side panel and the second side panel may be configured to be completely symmetrical with respect to a center line of the airbag in the width direction, the first side panel and the second side panel each having a first end (the left end in FIG. 3) and a second end (the right end in FIG. 3) opposite each other. The second end is configured to have a curved profile, and the first side panel and the second side panel narrow in a direction from the first end toward the second end. Advantageously, the narrowing design of the first side panel and the second side panel enables the narrow end to be used to protect the occupant while the wide end is used to be positioned on the dashboard to provide support, and in addition, the end portion of the first chamber opposite the gas inlet is positioned between the windshield of the vehicle and the dashboard, such that the airbag as a whole is reliably supported. As an example, the first chamber 110 is configured to have a flat shape and includes a gas inlet. The gas inlet is positioned relative to the left side of the drawing, that is, positioned at a position closer to the first ends than the second ends of the first side panel 12 and the second side panel 13.

According to the embodiments of the present invention, the width of at least a portion of the third section is greater than the width of the first section and the width of the second section. It may be appreciated that this wider portion of the third section is used to reliably protect the occupant via a larger area.

According to the embodiments of the present invention, the airbag is formed only by the main panel, the first side panel, and the second side panel. Such an airbag has a simple structure, the shapes of the portions forming the airbag are regular, and there are few connection steps; thus, the airbag has the characteristics of simple manufacturing and low costs.

According to the embodiments of the present invention, the main panel, the first side panel, and the second side panel are fabric, and the main panel, the first side panel, and the second side panel are connected together via stitches. However, this is merely an example, and the connection performed via stitches may, for example, be replaced with a connection method performed via bonding.

As described above, although the exemplary embodiments of the present invention have been described with reference to the accompanying drawings in the description, the present invention is not limited to the aforementioned specific embodiments, and the scope of protection of the present invention should be defined by the claims and equivalent meanings thereof.

## Claims

1. A safety airbag device used for mounting at the roof of a vehicle, comprising:
an airbag (10, 10'), having an inflated state and a stowed state, and comprising a first chamber (110) and a second chamber (120) in fluid communication with each other,
**characterized in that**:
the airbag (10, 10') comprises a main panel (11), and a first side panel (12) and a second side panel (13) connected to the main panel (11),
the main panel (11) is configured to be in the shape of a strip, and comprises two first folding lines (11A) spaced apart in the length direction of the main panel (11), the two first folding lines (11A) dividing the main panel (11) into a first section (111), a second section (112), and a third section (113) located between the first section and the second section,
the second chamber (120) is defined by the third section (113), as well as the first side panel (12) and the second side panel (13) connected to two opposite sides of the third section (113) in the width direction of the main panel (11),
at least one of the first section (111) and the second section (112) comprises a second folding line (11B), the first section (111) and the second section (112) partially overlap after being folded along the respective folding lines thereof, and the first chamber (110) is defined only by the first section (111) and the second section (112).

2. The safety airbag device according to claim 1, wherein the first side panel (12) and the second side panel (13) are configured to be completely symmetrical with respect to a center line of the airbag in the width direction, the first side panel (12) and the second side panel (13) each having a first end and a second end opposite to each other, the second end being configured to have a curved profile, and the first side panel (12) and the second side panel (13) narrowing in a direction from the second end toward the first end.

3. The safety airbag device according to claim 2, wherein the first chamber (110) is configured to have a flat shape and comprises a gas inlet, and the gas inlet is positioned at a position closer to the first ends than to the second ends of the first side panel (111) and the second side panel (112).

4. The safety airbag device according to claim 3, wherein the second section (112) comprises one second folding line (11B), an end portion of the second section (112) and an end portion of the first section (111) together defining the gas inlet, and the two first folding lines (11A) being partially connected together in the width direction of the main panel (11) to define the size of a vent between the first chamber (110) and the second chamber (120).

5. The safety airbag device according to claim 3, wherein the second section (112) comprises one second folding line (11B), and the first section (111) comprises one second folding line (11B), a portion of the first section (111), after being folded along the second folding line (11B), being partially held between the second section (112),, and the two first folding lines (11A) being configured to be spaced apart from each other by a certain distance.

6. The safety airbag device according to claim 1, wherein the width of at least a portion of the third section (113) is greater than the width of the first section (111) and the width of the second section (112).

7. The safety airbag device according to claim 1, wherein the airbag (10, 10') is formed only by the main panel (11), the first side panel (12), and the second side panel (13).

8. The safety airbag device according to claim 3, wherein the gas inlet is configured to be connected to a gas generator of the safety airbag device, so that gas generated by the gas generator sequentially enters the first chamber (110) and the second chamber (120).

9. The safety airbag device according to claim 1, wherein the main panel (11), the first side panel (12), and the second side panel (13) are fabric.

10. The safety airbag device according to claim 9, wherein the main panel (11), the first side panel (12), and the second side panel (13) are connected together via stitches.

11. The safety airbag device according to claim 1, wherein at an intersection of the first chamber (110) and the second chamber (120), the first section (111), the second section (112), and the third section (113) each has a tab extending outwards in the width direction thereof.
